# EUROPEAN PATENT SPECIFICATION

(11) **EP 4 316 693 B1**
(45) Date of publication and mention of the grant of the patent: **02.07.2025**
(21) Application number: 23189717.4
(22) Date of filing: 04.08.2023
(51) Int. Cl.: B23K 26/0622, B23K 26/08, B23K 26/122, B23K 103/04, B22F 5/08, B22F 10/60, B23K 26/356, B33Y 40/20, B33Y 80/00, C21D 10/00, B23P 15/14

(54) **METHOD FOR IMPROVING SURFACE INTEGRITY OF AN ADDITIVE MANUFACTURED MESOSCOPIC GEAR, AND PRODUCT THEREOF**
VERFAHREN ZUR VERBESSERUNG DER OBERFLÄCHENINTEGRITÄT EINES ADDITIV GEFERTIGTEN MESOSKOPISCHEN GETRIEBES UND PRODUKT DARAUS
PROCÉDÉ D'AMÉLIORATION DE L'INTÉGRITÉ DE SURFACE D'UN ENGRENAGE MÉSOSCOPIQUE FABRIQUÉ DE MANIÈRE ADDITIVE ET PRODUIT ASSOCIÉ

(30) Priority: 04.08.2022 LU 502626
(43) Date of publication of application: 07.02.2024
(73) Proprietor: Fyzikální ústav AV CR, v. v. i., 18200 Praha 8 (CZ)
(72) Inventor: Pathak, Sunil, 2541 Dolni Brezany (CZ); Böhm, Marek, 2541 Dolni Brezany (CZ); Kaufman, Jan, 25241 Dolni Brezany (CZ); Zulic, Sanin, 25241 Dolni Brezany (CZ); Brajer, Jan, 25241 Dolni Brezany (CZ); Stransky, Ondrej, 25241 Dolni Brezany (CZ); Rostohar, Danijela, 25241 Dolni Brezany (CZ); Radhakrishnan, Jagdheesh, 25241 Dolni Brezany (CZ); Sladek, Juraj, 25241 Dolni Brezany (CZ)
(74) Representative: Bauer, Karel

(56) References cited:
- EP-A1- 3 613 534
- WO-A1-2018/156143
- DE-A1- 102021 105 991
- US-B2- 10 619 222
- PRABHAKARAN S ET AL: "Laser shock peening without coating induced residual stress distribution, wettability characteristics and enhanced pitting corrosion resistance of austenitic stainless steel", APPLIED SURFACE SCIENCE, vol. 428, 19 September 2017 (2017-09-19), pages 17 - 30, XP085283235, ISSN: 0169-4332, DOI: 10.1016/J.APSUSC.2017.09.138

## Description

### Technical field

The present invention relates to a method of post-manufacturing treatment of a 3D-printed product. More particularly, the present invention relates to post-manufacturing treatment by laser shock peening applied on a gear printed on a 3D printer. Even more particularly, the invention relates to post-manufacturing laser shock peening of a gear having a size between 1 mm to 10 mm.

The second aspect of the present invention relates to a gear having a size between 1 mm and 10 mm, so called mesoscopic gear, being treated by laser shock peening to provide increased lifetime service.

### State of the art

Gears are used in various industrial and technological applications to permit power transmission from one rotating or translating element to another. Each gear generally includes an array of gear teeth that mesh with the gear teeth of another gear so that the rotation or translation of the first gear can be transmitted to the second. The forces on the gear teeth over time may cause failure of the gear, i.e. end of life of the gear. Therefore, there is a demand to improve the quality of the gear and extend service life.

3D printing is a known method for component manufacturing made of wax or any suitable thermoplastic, such as a plastic toy. However, the 3D printing method for mechanical industry or construction is not yet well established. The mechanical components require long-term reliability and mechanical resilience, which, due to the nature of the method, cannot always be guaranteed. 3D-printing is also known as additive manufacturing. In additive manufacturing, a component is created by adding material, unlike milling, which removes material from a structural part. The material, in the case of the mechanical industry, should be a steal or similar material having similar properties. Currently, there are only a few available methods for additive manufacturing of steel, which usually requires selective laser melting and selective laser sintering. Another method of steel additive manufacturing is directed to laser metal deposition, in which a metal powder is applied to a local molten pool provided by the laser. The main limitation of a product built by the additive manufacturing in the mechanical industry is its inadequate mechanical properties compared to conventionally produced products. The main limitation is the result of tensile residual stresses (TRS), increased surface roughness, and lower part density.

Laser shock peening (LSP) is a well-known process that uses high-intensity laser pulses to generate deep compressive residual stresses. Standard LSP can be performed with laminar water flow over the surface of the component. The surface is also covered with an absorption layer that both absorbs the laser pulse and protects the underlying substrate from heat effects. The absorbent coating local to the laser impingement becomes plasma that is constrained by the component and water layer. A pressure pulse is thus created which propagates as a shock wave deep into the material and generates compressive residual stresses.

There exists macroscopic gear defined as the gear having the size more than 10-12 mm. The microscopic gears are having the size less than 1 mm and Mesoscopic gear have size in the range of 1 mm to 10 mm.

The method of additive manufacturing by means of selective laser melting and laser shock peening as the post-processing is described in US2017087670. The document discloses application of laser shock peening during the steps of additive manufacturing. The proposed solution, however, requires additional requirements on timing of the laser beams used for laser melting and laser shock peening.

There is a demand for a gear printed on a 3D printer from certain type of material, such as stainless steel.

US10619222 discloses a method and product, wherein an area-selective hardening treatment is applied. The product is a gear comprising areas referred to as a top, a face, a flank, and a fillet radius or root radius at the base of the teeth. The fatigue strength of the root radii of the gear teeth can be improved by masking carburization in this area, and inducing compressive stress in the masked areas by a surface treatment such as laser peening. This document, however, does not provide the solution for mesoscopic gear made by additive manufacturing.

Thus, the object of the present invention is to provide a method for improving service life of the gear having outside diameter between 1 mm and 10 mm, wherein the gear is made of stainless steel by additive manufacturing.

Document WO2018156143 discloses a three-dimensional printing method which, for example, allows to form a part in the form of a gear.

The article "Laser shock peening without coating induced residual stress distribution, wettability characteristics and enhanced pitting corrosion resistance of austenitic stainless steel"; S. Prabhakaran et al.; Applied Surface Science 428 (2018) 17-30; discloses a low energy laser shock peening without coating on AISI 304 austenitic stainless steel specimens.

### Summary of the Invention

The present invention is defined by the independent claims. Advantageous embodiments are described in dependent claims.

The above mentioned problem is solved by the present invention. In a first aspect, a method for improving surface integrity, therefor improving service life, of an additive manufactured gear having size from 1 mm to 10 mm is provided. The method comprises the steps of:
- providing a gear made of stainless steel by additive manufacturing;
- immersing the gear into a water pool; wherein at least a part of the gear intended for post manufacturing processing is completely immersed in static water; and wherein the gear is placed within the water, preferably with the help of a robotic arm, at a distance ranging from 5 cm to 10 cm from the laser beam source;
- setting a laser beam for laser shock peening; wherein the step of setting comprises: setting laser pulse having energy between 200 mJ and 1 J, setting pulse duration of the beam to value between 10 ns and 15 ns, setting repetition rate from 1 Hz - 15 Hz, and setting density of the laser beam is between 1,7 GW/cm² and 8.49 GW/cm²;
- applying the laser shock peening to a root along a fillet radius in a gap between two neighbouring teeth of the gear immersed in the water, wherein
- the laser shock peening is applying directly to the surface of the gears without protective taping or coating; and wherein
- the spot size of the laser beam is substantially the same as the size of the gap, and wherein the irradiated stop sizes are overlapping for at least 90% of the area.

The above mentioned method provides an improvement in service life. In particular, the application of laser shock peening imparts the compressive residual stresses in the root, fillet radius, and space between the two teeth of the gears. Microstructure, residual stresses and surface roughness have been improved in terms of average surface roughness *Rₐ* and peak material volume *Vₘₚ.* Particular improvement is connected to fatigue of the gear. Fatigue is defined as a process of progressive localized plastic deformation occurring in a material subjected to cyclic stresses and strains at high stress concentration locations that may culminate in cracks or complete fracture after a sufficient number of fluctuations.

Laser shock peening was performed without affecting the geometry of the gear tooth's face width, top land, and pitch. Furthermore, improved residual stresses, improved surface roughness and no alteration in the dimensional mesoscopic-geometry have been observed, which due to the size of the gear is advantageous.

Better surface morphology, in particular, low level of applied energy of the laser beam ranging from 200 mJ to 1 J eliminates the need for high-power lasers, thus making the processing cost effective and suitable to be implemented by the state of the art laser device. Synergetic effect provided by the combination of energy and density of the laser beam as mentioned above provides the advantage of not using tape during LSP.

The size of the gear is hereby referred to distance between two teeth on opposite sides of the gear, i.e. outer diameter of the gear. There is no limit to the width of the gear, which can be more than 10 mm. Preferably, the width of the gear is substantially the same as the diameter of the gear. The size of the sub-parts, such as the size of a disc - inner diameter; the size of the teeth - for example circular pitch, circular thickness, face width, addendum, dedendum, chordal pitch; the size of the shaft hole - inner diameter; the chamfer or roundness at the root between the teeth; the chamfer angle of the helical gears are not limitation according to the present invention. In some embodiment, high of the teeth gear can be several millimetres, e.g. 2 mm, which can be mechanically damages when state of the art method of hardening is applied. The conditions of laser shock peening as claimed on the gear provides superior fatigue life and strength.

The stainless steel can be austenitic 316L stainless steel, which provides corrosion resistance, ductility, and biocompatibility. The austenitic steel 316L has low strength and wear resistance, limiting its high-performance applicability. However, due to the application of laser shock peening, the steel is plastically compressed and surface properties are improved. In another embodiment, the steel can be ferritic stainless steel or martensitic stainless steel. The method according to the present invention is applicable to any of stainless steel, independently of specific alloy, manufactured by means of additive manufacturing.

The additive manufacturing is a process of joining materials to make parts from 3D model data, usually layer upon layer, as opposed to subtractive manufacturing and formative manufacturing methodologies There are numerous ways in which units of material can be joined together to form a part. Different types of materials are being held together by different types of atomic bonds, in particular metallic materials, such as stainless steel, are typically held together by metallic bonds. For additive manufacturing processes, the feedstock, the bulk raw material that is fed into the process, can typically come in the form of powder (dry, paste or slurry), also in the shape of un-cured liquid material. Dependent on the shape, the feedstock may then be distributed layer by layer in a powder bed, deposited by a nozzle, applied as layers in a sheet stack, deposited through a print head, or applied as a liquid, paste or slurry in a vat. In respect to the great possibilities for variation in different types of materials, different types of feedstock and means of distribution of the feedstock, there is large number of possible principles that could be used for additive manufacturing processes. In some embodiment, the additive manufacturing can use of various advanced techniques, including electron beam melting and laser-based powder bed fusion (LPBF), commercially known as selective laser melting (SLM) or direct metal laser sintering (DMLS). In some embodiment, suitable material compatible with the method of additive manufacturing can be the austenitic nickel-chromium-based class, such as Inconel, and martensitic steel alloys. The preferred embodiment of the present invention aims to harness the potential of 3D printing to optimize the characteristics of these alloys for various demanding applications, including aerospace, defense, energy extraction, and more, with the post-processing manufacturing treatment by the laser shock peening. The alloy manipulation can involve precise control over crystallographic texture, solidification structure, and microstructure, thereby enhancing the final properties of the produced metal parts. However, for post-processing method according to the present invention, the characteristics of the additively manufactured mesoscopic gears are not the essential features and the invention can be used for any-type of the mesoscopic gears manufactured by any suitable method. In a more preferred embodiment, the step of additive manufacturing can comprise alloy selection, which can comprises the steps identifying and choosing suitable alloys, such as Inconel and martensitic steel alloys, based on their intended application and required properties. In another embodiment, suitable method can be Electron Beam Melting (EBM) Process, which employ an ARCAM electron beam melting system or a similar apparatus to carry out the 3D printing process. EBM process can selectively melt the alloy powder, allowing the controlled design of the crystallographic texture and solidification structure of the metal part. In another preferred embodiment, a Laser-Based Powder Bed Fusion (LPBF) Process can be used. Implementing LPBF, specifically selective laser melting (SLM) or direct metal laser sintering (DMLS), can be used to achieve additive manufacturing. A digital computer model can guide the precise location where a high-energy laser beam selectively melts and fuses the alloy powder. The embodiments are only the examples of the method of additive manufacturing. The method according to the present invention, however, is applicable to any stainless steel manufactured by means of additive manufacturing, independently on the actual steps of additive manufacturing.

Once the gear is produced by the additive manufacturing process, it is immersed in a water pool for LSP processing. Depending on the size of the gear, only the part of the gear that needs to be treated with LSP can be immersed in the water pool with no flowing water around it, thereby static water. In flowing water the cavitation is prevalent phenomenon which may lead to detrimental effect on the interacting surface. The application of immersed water was used because of the static condition of the water, liquid replenishment occurs immediately before the second pulse interacts with the surface, which protects the interacting surface from any detrimental thermal effects. This gives scope for pulse overlap LSP without the need to use any protective layer nor coating. It is not necessary to submerge the entire gear under the water surface. Preferably, a robotic arm can be used to submerge the gear below the water surface to place the gear at a precisely positioned distance below the water surface. It is also advantageous to use the robotic arm in terms of automation and speed of treatment of the laser shock peening. The gear is placed 5 to 10 cm below the water surface, this distance being empirically determined for the laser shock peening treatment given the laser parameter.

The place of applying the laser shock peening to the gear is specific. They are a root along a fillet radius and space between two teeth. It is at these points that the gear is most stressed and requires reinforcement. Due to the laser parameters set as mentioned above, the laser beam can be applied directly to the specific surface of the gear without any protective layer nor coating. The size of the spot corresponds to the gap between two neighbouring teeth. Furthermore, it was empirically observed that the spots of the beam, when laser shock peening is applied, is at least 90% to achieve improvement on the surface mechanical properties.

In a preferred embodiment, the method further comprising aligning the laser beam path from a laser source to the gear.

In another preferred embodiment, the method further comprising calibrating diagnostics of the laser source, in particular calibrating photodiode, energy meter, CCD camera for laser profile.

In another preferred embodiment, the method further comprising controlling the laser beam for laser shock peening by the robotic arm.

In another preferred embodiment, the method wherein the step of providing the gear and applying the laser shock peening is providing a helical gear and applying the laser shock peening on the helical gear. Helical gear is a species of the general gear, wherein the teeth are cut at an angle to the hole (axis) rather than straight and parallel to the hole like the teeth of a spur gear. Applying the laser beam to the area between the teeth is problematic with the helical gears. In particular, the problematic part of the application lies in the need to change the position of the beam with respect to the changing angle at the tooth root depending on the position. At the same time, at least 90% overlap must be maintained. It is especially advantageous to combine the embodiment with an adaptive laser beam alignment.

In another aspect of the present invention, an additive manufactured gear made of stainless steel is provided. Such the mesoscopic gear can be preferably manufactured by the method according to the present invention. The additive manufactured gear made of stainless steel having size from 1 mm to 10 mm comprising plurality of teeth. Pressure angle in relation to the gear teeth can be within the range known to the skilled person in the art. Residual stress introduced in the gear by laser shock peening is negative. Arithmetic mean height on the gear surface is up to 40 µm. Number of grains having size less than 50 µm is greater than the number of grains having size greater than 50 µm in any selected area treated by laser shock peening.

Pressure angle in relation to gear teeth, also known as the angle of obliquity, is the angle between the tooth face and the gear wheel tangent. It is more precisely the angle at a pitch point between the line of pressure (which is normal to the tooth surface) and the plane tangent to the pitch surface. I accordance with the present invention, the angle is within the range known to the skilled person in the art.

Residual stress introduced in the gear by laser shock peening is negative. In a mathematical sense the term compressive residual stress refers to a negative residual stress. The compression is introduced into the material, nearby it's surface, via the laser shock peening. The compression redistributes the pressure over the surface of the root of gear. Since the residual stresses are also distributed over the gear surface, the surface layer properties produced by the laser shock peening directly affects part performance, including fatigue strength, wear behaviour, and chemical resistance. In a preferred embodiment, a method for measuring residual stress induced by laser shock peening and during the application of laser shock peening on the mesoscopic gear and/or before and after the application of laser peening on the mesoscopic gear is disclosed. The preferred method for residual stress monitoring and/or measurement leverages X-ray diffraction as an indirect means of quantifying strain within the material. The interaction between X-ray beams and the crystal lattice is harnessed in accordance with Bragg's Law, allowing for the precise determination of the diffraction peak's location, denoted as θ. The changes in the θ are small (in the range of tenths of a degree). If the 2θ angles are plotted against the (sin²ψ), where Ψ is an angle made between sample surface normal and lattice plane normal, the relationship is linear. From the fitted line, its slope is evaluated. If there is a rising tendency the measured stress is in compressive region. For the case of line being horizontal, the stress is zero and if the line is going down the stress is positive, i.e tensile. Preferably, during the measurement process, variations in the θ angle are observed. This distinct correlation serves as an indicator of strain magnitude, specifically highlighting regions characterized by compressive stress. Notably, when this observed correlation is established, the resultant measurement values are conventionally considered negative, aligning with established practices in stress analysis. Since the residual stresses on the sample can be tested before laser shock treatment with X-ray diffractometry on the same location and measured in the same way after laser shock treatment, a skilled person can deduce by comparing that the negative stresses were introduced by the laser shock treatment.

In a preferred embodiment, the present invention pertains to test methods for the determination of grain size. The preferred method can include the comparison procedure, planimetric (or Jeffries) procedure, and intercept procedures. For the purposes of the preferred test methods, the term "grain" refers to an individual crystal possessing consistent atomic configuration throughout a polycrystalline material. Notably, a grain may encompass twinned regions or sub-grains. The three steps for grain size estimation can comprises the comparison procedure, that eliminates the need for direct counting of grains, intercepts, or intersections. This step entails contrasting the grain structure with a sequence of graded images. Such images can be presented through mediums like wall charts, clear plastic overlays, or an eyepiece reticle. The planimetric step can necessitate a direct count of the number of grains within a known area. The intercept step can involve directly counting the number of grains intercepted by a test line or the number of intersections between grain boundaries and a test line. This count is measured per unit length of the test line and is utilized in calculating the mean lineal intercept length. Preferably, the method of grain size determination can be utilized by computer software, such as EDAX APEX 2.5 software and EBSD map were evaluated with EDAX OIM 8.6 software, wherein grain size diameter were evaluated using weighing by grain area. More preferably, the grain size are determined by publicly available ASTM E112-13 (Updated: Nov 17, 2021) standard.

In a preferred embodiment, the measurement of surface roughness can be achieved using contact profilometry, a well-established technique involving the use of a stylus or diamond-tipped probe. The stylus can be systematically dragged across the metallic surface, and its vertical displacement along the scan path can be recorded. The resulting height variations can calculate the roughness parameters Rₐ (average surface roughness). The contact profilometry method can be used for its exceptional accuracy and versatility in surface roughness measurement. In another embodiment, the invention employs non-contact optical profilometry techniques to measure surface topography without physical contact with the metallic surface. Techniques like white light interferometry and confocal microscopy can be used to generate high-resolution 3D images, offering precise measurement of roughness parameters. In another preferred embodiment, an Atomic Force Microscopy (AFM), a powerful nanoscale imaging technique, can be used for surface roughness evaluation. The AFM can utilize a sharp cantilever with a nanoscale tip to scan the metallic surface, detecting forces between the tip and the surface. This allows for ultra-high-resolution 3D imaging, enabling the measurement of roughness parameters at the nanometer scale. The AFM technique is particularly advantageous when assessing nanostructured metallic surfaces.

In a preferred embodiment, the compressive residual stress ranges from -430 MPa to -100 MPa.

In another preferred embodiment, peak material volume is from 1,55 µm³/µm² to 1,62 µm³/µm²; and core material volume is from 24,6 µm³/µm² to 25,1 µm³/µm² ; core void volume is from 41 µm³/µm² to 48 µm³/µm² ; and valley void volume is from 1,63 µm³/µm² to 2,21 µm³/µm².

In a preferred embodiment, the gear is a helical gear or a spur gear.

The helical gear is preferably provided with the residual stress ranging from -430 MPa to -230 MPa. In another preferred embodiment of the helical gear embodiment, average surface roughness is at least 10.

The spur gear has preferably residual stress introduced by LSP from -300 MPa to -100 MPa.

### Brief description of the drawings

Fig. 1 represents a schematic drawing of a mesoscopic spur gear and helical gear for LSP application.
Fig. 2 represents a method steps according to the present invention.
Fig. 3 represents parts of a gear for laser shock peening (LSP) application.
Fig. 4 represents an image of flat base material before LSP provided by electron backscatter diffraction.
Fig. 5a and 5b represent images for a mesoscopic gear according to the present invention after LSP
Fig. 6a-6f represents a comparative images of the surface of the mesoscopic spur gear according to the present invention with respect to energy of the laser beam.
Fig. 7a-7f represents a comparative images of the surface of the mesoscopic helical gear according to the present invention with respect to energy of the laser beam.
Fig. 8 represents residual stress distribution in the spur and helical gear treated by the method according to the present invention.
Fig. 9 represents particular arithmetic mean height and average surface roughness for the spur and helical gear.
Fig. 10 represents parameters of material distribution in the referenced unpenned gear, spur and helical gears.

### Detailed description

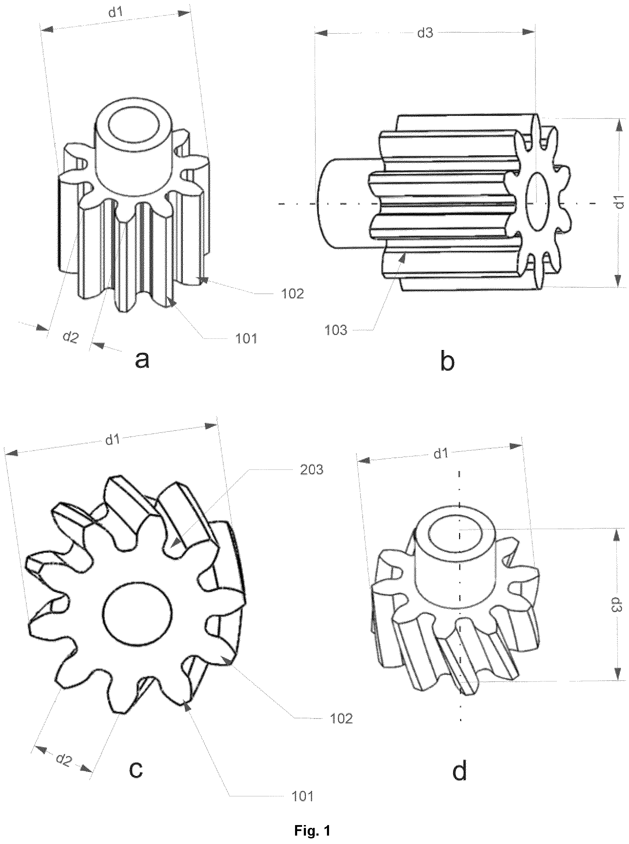

**Fig. 1** schematically shows two preferred embodiments of a gears, a spur gear and a helical gear. **Fig. 1a** and **1b** shows a spur gear and **Fig. 1c** and **1d** shows a helical gear. The skilled person in the art, however, may recognize that the present invention can be implemented into any of the state of the art gear within mesoscopic size. **Fig. 1** schematically shows sizes of the gear. In particular, **d1** refers to a distance between two teeth on opposite sides of the gear, i.e. diameter of the gear. The parameter **d1** is within 1 mm to 10 mm to be classified as the mesoscopic gear. Parameter **d2** refers to a distance between two neighbouring teeth **101** and **102.** It may be alternatively referred as the out diameter of the gear regardless of its generality. Usually, **d2** is substantially smaller compared to **d1.** For example, if **d1** is 10 mm **d2** can be about 2 mm. Parameter **d3** refer to width of the gear. The height does not need to be within the mesoscopic range. For example, the width **d3** of the gear may be 20 mm. Preferably, the width **d3** is substantially comparable with the outer diameter **d1** of the gear. For example, if the outer diameter **d1** is about 5 mm, the width **d3** can be about 5 mm. The rest of the parameters, such as inner diameter; circular pitch, circular thickness, face width, addendum, dedendum, chordal pitch; the size of the shaft hole - inner diameter; the chamfer or roundness at the root between the teeth; the chamfer angle of the helical gears are without limitation and the skilled person in additive manufacturing may freely design those parameters so that the gear is constructible.

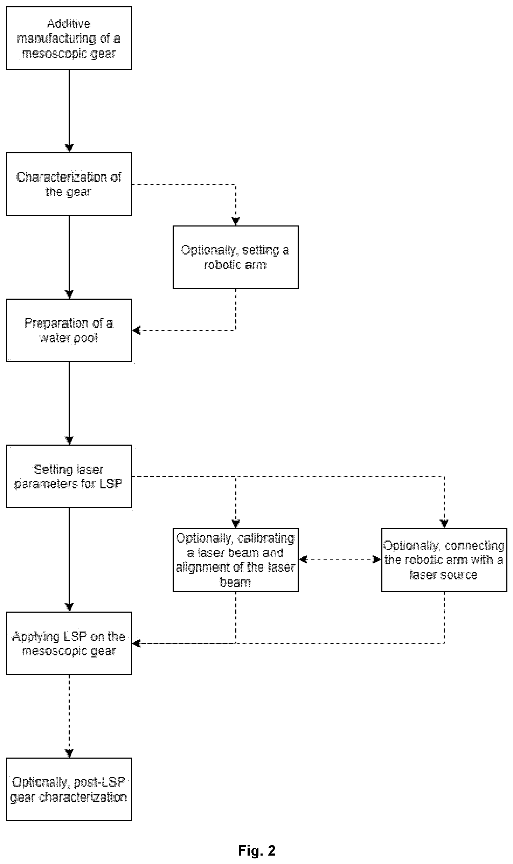

**Fig. 2** shows an algorithm of the method step according to the present invention. In a first step, a gear is provided. The gear is manufactured by additive manufacturing method known to the skilled person in the art. Material of the gear is stainless steel. The material can be austenitic 316L stainless steel, ferritic stainless steel or martensitic stainless steel. The gear can be pre-characterized on residual stresses, surface roughness, scanning electron microscopy, micro-geometry. The gear manufactured by additive method is usually fragile and does not achieve the material properties of macroscopic gears. Hence, such a gear needs to be further treated so that it acquires the properties that are characteristic of macroscopic gears. In the next step, the gear is at least partially immersed in the water pool, so that the part to be treated by the laser shock peening is immersed in a depth of 5 - 10 cm below the water surface. It is advantageous to use a robotic arm for immersing the gear. The water can be a state of the art de-ionised water and does not require any special condition. In the next step, the laser is set to the empirically observed parameter, which provides sufficient compression stress below the surface of the gear, while the gear preserve its structural integrity without any observable damage. The laser is set to: laser pulse having energy between 200 mJ and 1 J, setting pulse duration of the beam to value between 10 ns and 15 ns, setting repetition rate from 1 Hz - 15 Hz, and setting density of the laser beam is between 1,7 GW/cm² and 8,49 GW/cm². In a preferred embodiment, the laser beam is calibrated with diagnostic system, such as photodiode, energy meter, CCD camera for laser profile. Preferably, the robotic arm is turned on and connect with the laser source so that laser can be controlled from the robotic arm. The laser beam is than focused to specific part of the mesoscopic gear, in particular to a root along a fillet radius and space between two teeth of the gear. The above-mentioned setting introduces to the stainless steel compressive pressure via laser shock peening. The gear is provided without protective taping nor coating so that the laser beam is applied directly on the surface of the gear. The laser beam is provided with the spot size, which is substantially about the size of the gap **103,** resp. **203,** between two neighbouring teeth **101** and **102.** The irradiated spots are overlapping for at least 90 % of the area during the laser shock peening application. The skilled person in the art may find the advantage, in particular in the embodiment of the helical gear, to align the laser beam so that it corresponds to the helix angle dependency.

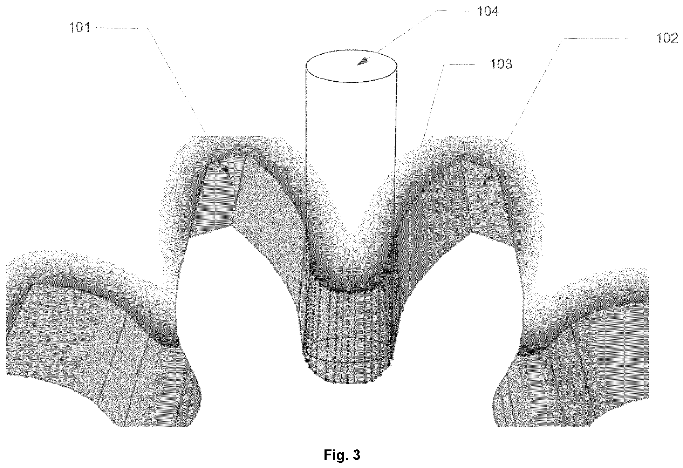

**Fig. 3** discloses a detail of the laser shock peening applied on the root along a fillet radius and space between. Laser beam **104** is focused on the space **103** between teeth **101** and **102.** Dotted line represents the line of the laser beam application, i.e. the introduction of the residual stress introduced by the laser shock peening.

### Examples

In a first example according to the present invention, a mesoscopic spur gear having the size shown in table 1 has been manufactured by means of additive manufacturing. The selective laser melting has been used as an additive manufacturing technique; the details of parameters used to print the gears are presented in table 2. The gear was designed with module 0.8 and number of teeth as 10 for both spur and helical geometry. While the pressure angle for both the geometries was chosen a 20 ° and helix angle for helical gear was 20 °.

Laser Shock Peening (LSP) was applied by using a solid state diode pumped laser system with a laser source was a Nd:YAG - a pulsed laser having pulse duration of upto 15 ns, operating at 1064 nm. The beam spatial energy distribution is "top-hat" and the pulse shape is near - Gaussian. Round laser spots of 1 mm diameter were used with a laser energy per pulse in the range of 200 mJ to 1 J, whereas the laser device has capacity of maximum energy as 3 J. The ratio of spot size and energy per pulse was chosen such as to keep a power density for the present work in the range of 1.7 to 8.49 GW/cm². The advantage in using lower energies per pulse (for a given power density) is observed as to secure that the profile of the gears will not differ from the original and at the same time to impart compressive residual stresses.

The laser shock peening was applied to mesoscopic spur and helical gear in the filler area and the root, the spot size of the laser beam i.e. 1 mm is selected in such a way that it covers the root and fillet gap and does not affect the flank surface of the gears as schematically shown on **Fig. 3****.**

The pressure created at the surface of the part was estimated to maximum of 5 GPa using the energy in the range of 200 mJ to 1J, with pulse frequency of 15 Hz and the overlap of 90 % was used for spot size of 1 mm without a protective ablative layer.

Residual stresses measurements were done with XRD measurements, the cathode source used for the measurement was chromium (Cr) radiation (Kα=2.29103 Å) at 40 kV and 40 mA. To analyse the manufactured gears with SLM Face centred structured (220) diffraction peak was used.

Preferably, the laser beam path can be aligned from the laser source to the gear.

Preferably, the method comprises calibrating photodiode, energy meter, CCD camera for laser profile.

In a second example according to the present invention, a mesoscopic helical gear having the size shown in table 1 has been manufactured by means of additive manufacturing.

Laser Shock Peening (LSP) was applied done using the laser device. The laser source was a Nd:YAG. The beam spatial energy distribution is "top-hat" and the pulse shape is near - Gaussian. Round laser spots were used with a laser energy per pulse of either. The ratio of spot size and energy per pulse was chosen such as to keep a constant power density.

The pressure created at the surface of the part was estimated to maximum of 5 GPa using the energy in the range of 200 mJ to 1J, with Pulse frequency of 15 Hz and the overlap of 90 % was used for spot size of 1 mm without a protective ablative layer.

Residual stresses measurements were done with XRD measurements, the cathode source used for the measurement was chromium (Cr) radiation (Kα=2.29103 Å) at 40 kV and 40 mA. To analyse the manufactured gears with SLM Face centred structured (220) diffraction peak was used.

**Table 1**

| **Parameters** | **Spur gear** | **Helical gear** |
|---|---|---|
| number of teeth | 10 | 10 |
| normal module | 0.8 | 0.8 |
| transverse module | 0.8 | 0.85 |
| pressure angle (degree) | 20 | 20 |
| transverse pressure angle (degree) | 20 | 21.17 |
| helix angle (degree) | 0 | 20 |
| addendum diameter (mm) | 9.6 | 10 |
| pitch circle diameter (mm) | 8 | 8.5 |
| base circle diameter (mm) | 7.5 | 7.9 |
| root diameter (mm) | 6 | 6.3 |
| tooth thickness (mm) | 1.25 | 1.21 |
| bore diameter (mm) | 4 | 4 |
| height of hub (mm) | 5 | 5 |
| hub outer diameter (mm) | 6 | 6 |

### SLM parameters

**Table 2**

| | |
|---|---|
| Slice thickness: | 0,02 mm |
| Laser focus diameter: | 0,055 mm |
| Laser speed: | 675 mm/sec |
| Laser Power: | 150 W |
| Hatch distance: | 0,1 mm |

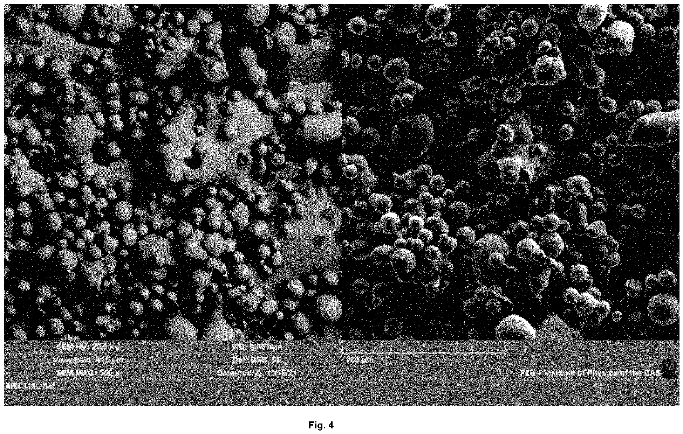

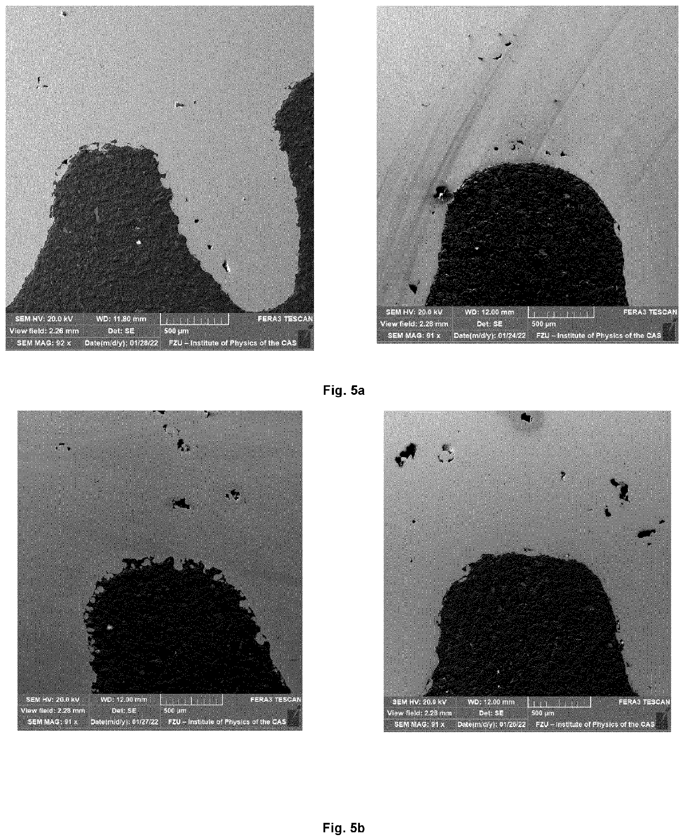

**Fig. 4** depicts the SEM image of the flat plate printed of the stainless steel materials manufactured using the SLM, where we can see that there are several unfused particles visible and thus leads to have poor surface morphology. Whereas **Fig. 5a** and **5b** present the photograph of the manufactured spur and helical gears by method of additive manufacturing mounted under SEM before (left part) and after (right part) LSP. It is observable that the left parts of the figures, which correspond to the unpenned gears, contain highly porous surface. After LSP treating in accordance with present invention, the surface is flat and the porous character of the gear was diminished.

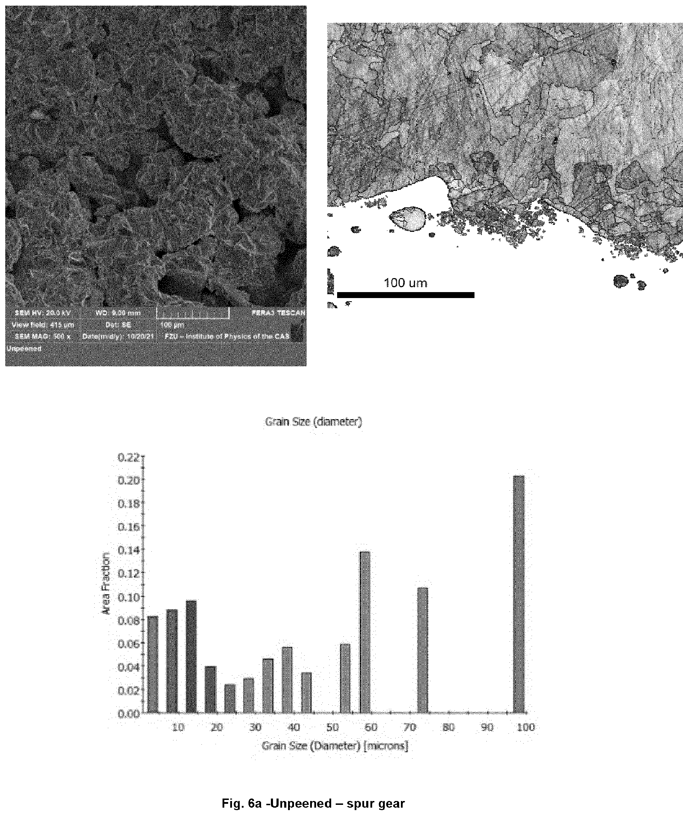

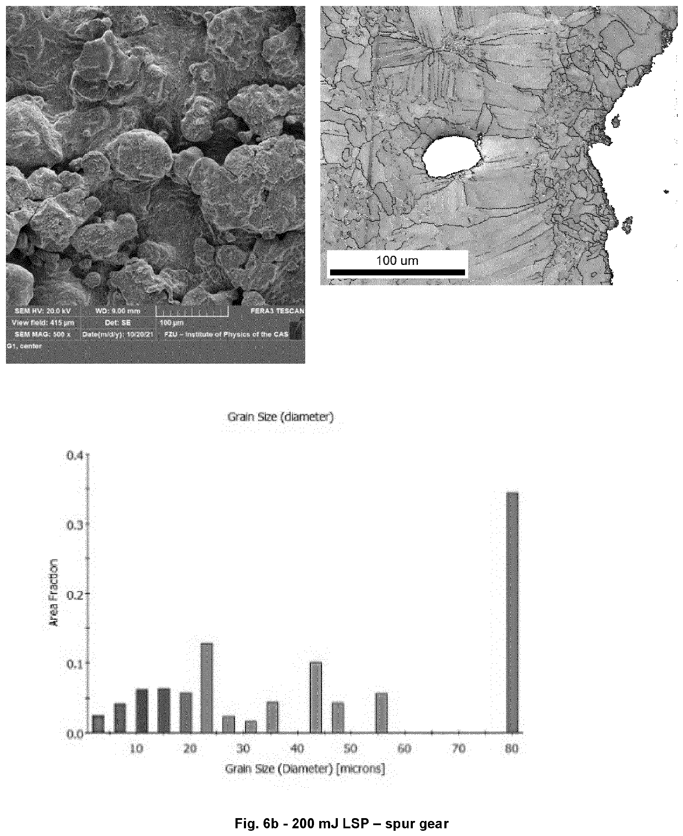

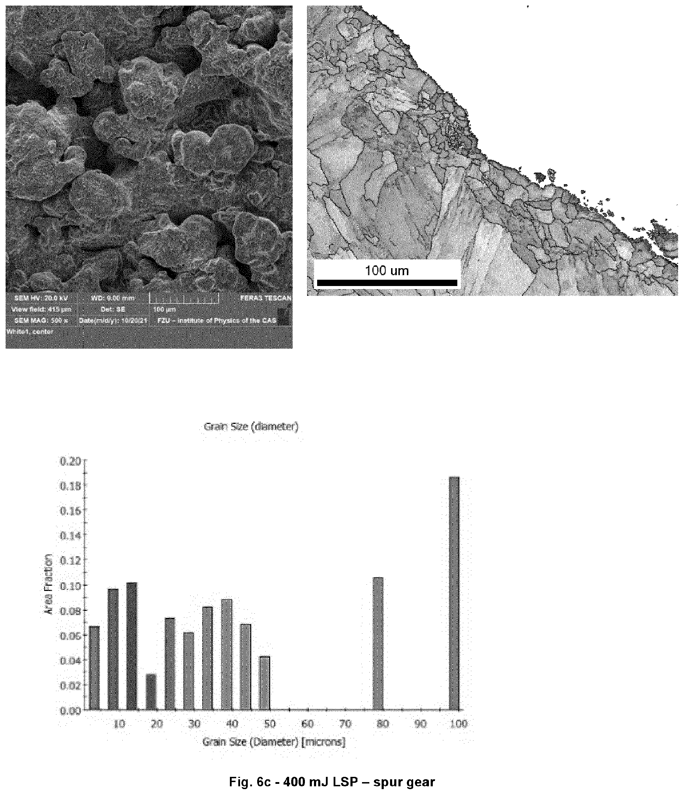

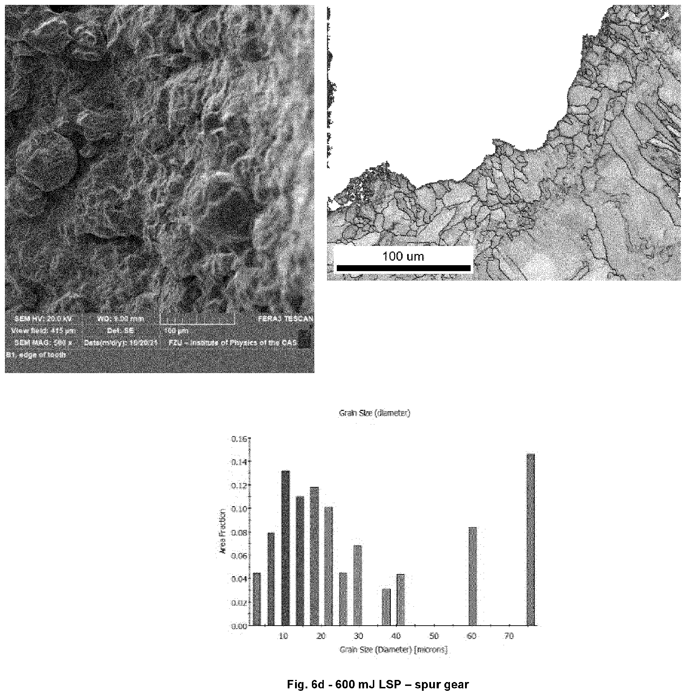

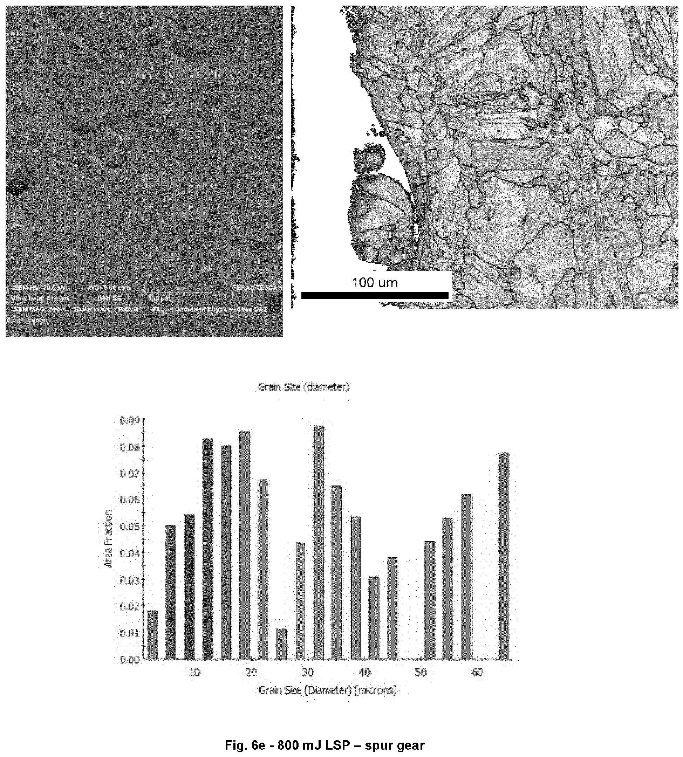

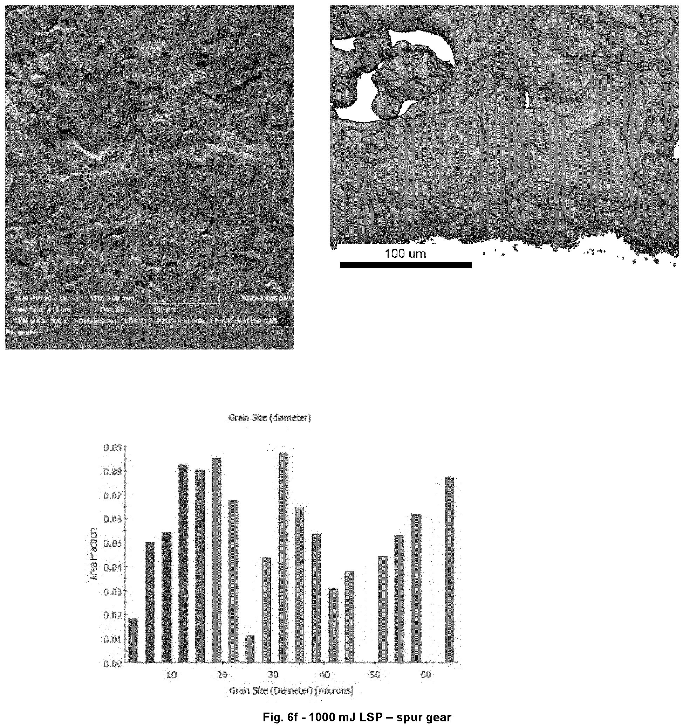

**Figure 6-7** presents the SEM and electron backscattered diffraction (EBSD) images for the unpeened samples and LSPeened samples at different energies. **Fig. 6-7** also depicts the grain size distribution obtained through microscopy for the unpeened samples and LSPeened samples at different energies. It can be observed while comparing the surface morphology that LSP has successfully altered the microstructure in terms of grain size and redefined the grain boundaries for both the gear geometries. The changes in the microstructures after LSP were one of the prime movers in improving the mechanical properties such as compressive residual stresses. The grain size analysis has been performed based on the grain size distribution on all three samples for 1 mm depth from the top on the ridge of the sample. The grains under 50 µm is considered fine grains, whereas the size of grains in the range of 50-100 µm and above 100 µm is deemed to be medium and large size grains, respectively. It has been observed that the majority of the grains in the unpeened sample was in the range of medium to large grains, whereas the effect of peening was visible in both the types of geometries i.e. spur and helical gear samples where the grain sizes were in the refined to fine to medium grains. Most of the substantial grains, i.e., 70 µm and above, visible in the unpeened sample, were eliminated after LSP.

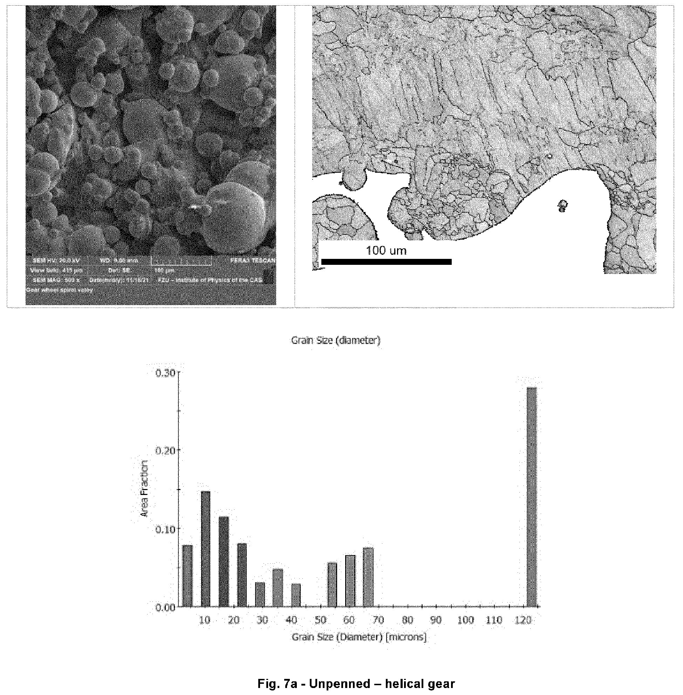

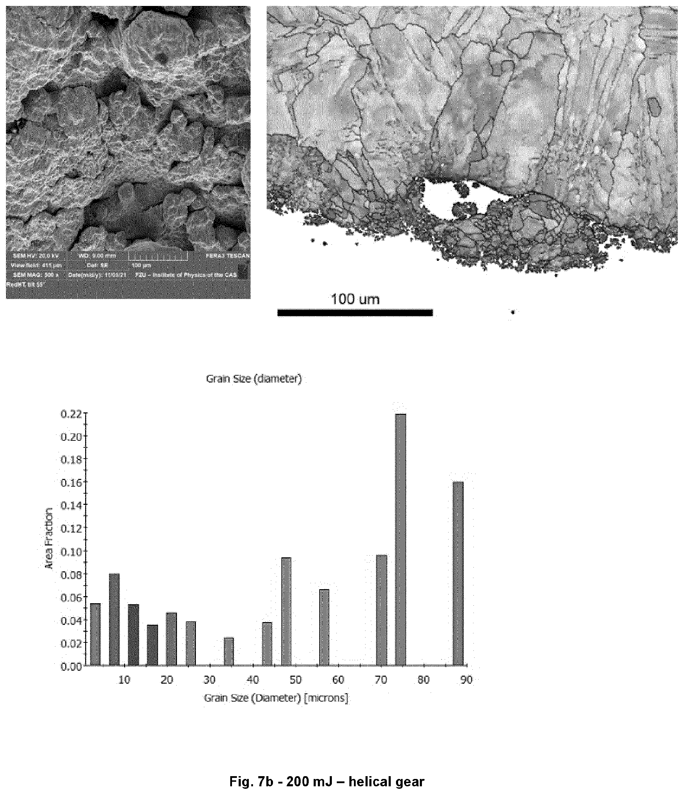

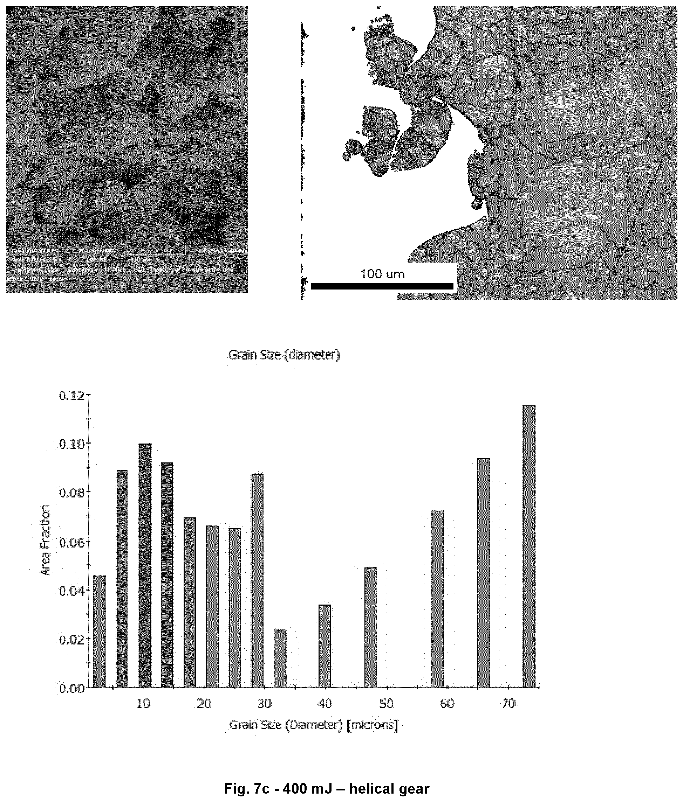

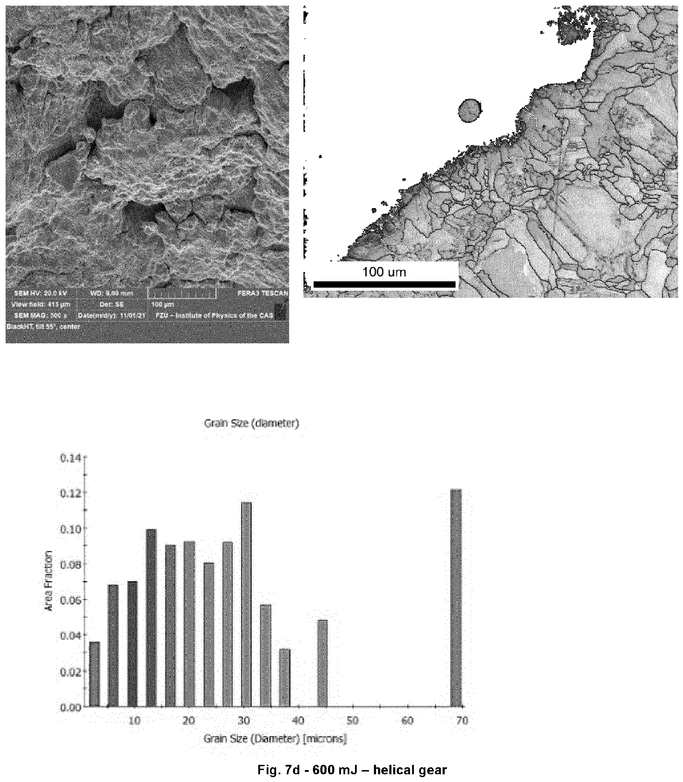

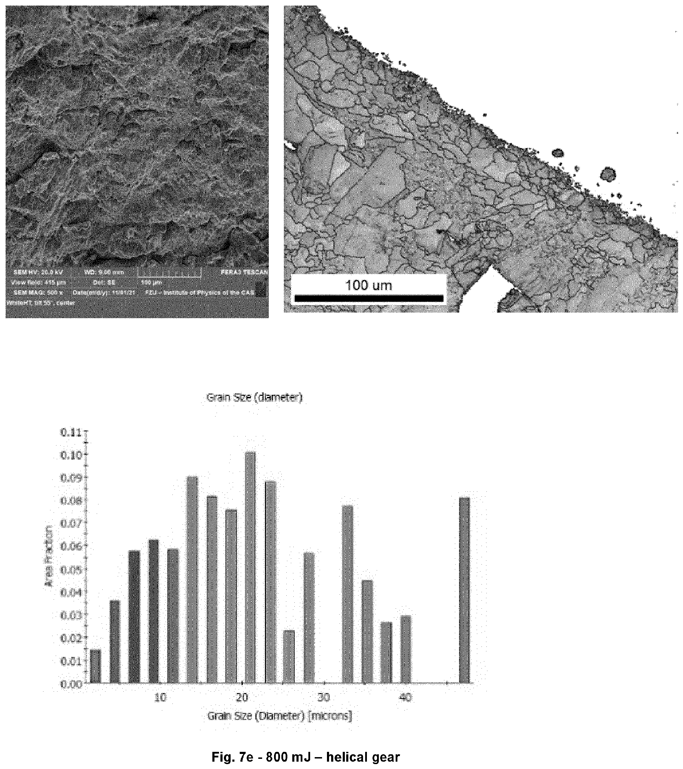

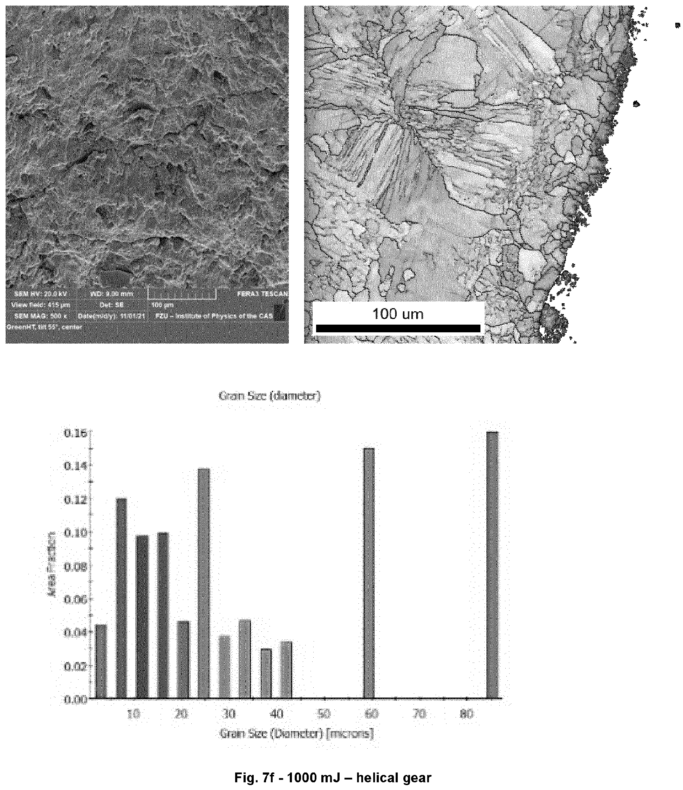

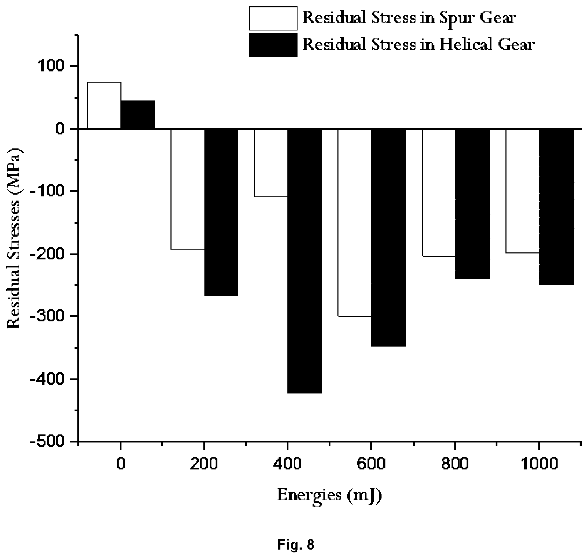

**Fig. 8** further discloses the distribution of residual stresses introduced to the gear in accordance with above-mentioned examples. The unpenned gear shows positive residual stress in both, spur and helical gear. On the other hand, after the application of the method according to the present invention, negative residual stress (compression) was introduced to the gear. The negative stress ranges from -430 MPa to -100 MPa. Particular improvement of the surface morphology is shown on the Fig. 6 and 7. In the example relating to spur gear, the compression ranges from -300 MPa to -100 MPa. In the example of helical gear, the compression ranges from - 430 MPa to - 230 MPa.

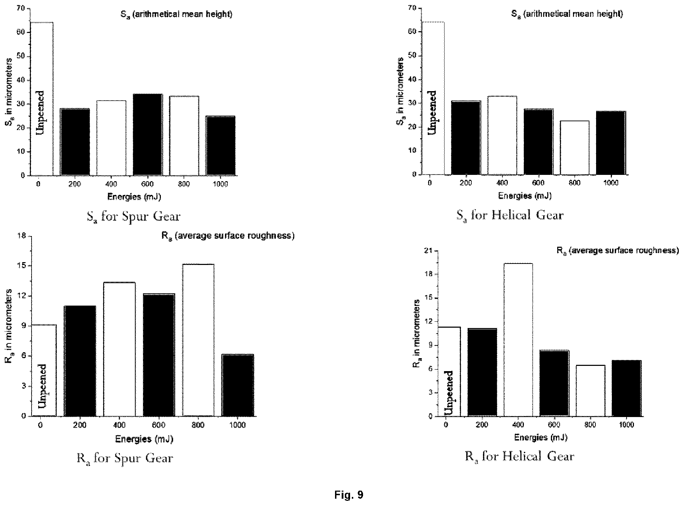

**Fig. 9** shows particular arithmetic mean height and average surface roughness for the spur and helical gear according to the example above.

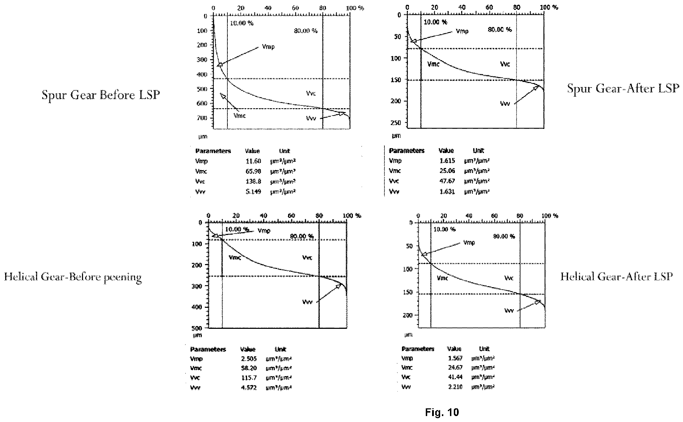

**Fig. 10** shows particular parameters of material distribution. The comparative study is shown among referenced unpenned gear, the spur gear and helical gear after peening. Vmp stands for peak material volume, Vmc stands for core material volume, Vvc stands for core void volume, Vvv stands for valley void volume. All of the above-mentioned parameters corresponds to the well-known Abbott-Firestone curve.

## Claims

1. A method for improving surface integrity of a gear made of stainless steel by an additive manufacturing method, wherein the gear having distance between two teeth on opposite sides of the gear from 1 mm to 10 mm comprising
- providing the gear made of stainless steel by additive manufacturing;
- immersing the gear into a water pool so that the part to be treated by the laser shock peening is immersed in a depth of 5-10 cm below the water surface;
- setting a laser beam for laser shock peening; wherein the step of setting comprising setting laser pulse having energy between 200 mJ and 1 J, setting pulse duration of the beam to value between 10 ns and 15 ns, setting repetition rate from 1 Hz - 15 Hz, and setting density of the laser beam is between 1,7 GW/cm² and 8,49 GW/cm²;
- applying the laser shock peening to a root along a fillet radius in a gap (103 or 203) between two neighbouring teeth (101 and 102), wherein
- the laser shock peening is applying directly to the surface of the gears without protective taping nor coating; and wherein
- the spot size of the laser beam is substantially the same as the size of the gap, and wherein the irradiated spot sizes are overlapping for at least 90% of the area.

2. The method according to claim 1 further comprising aligning the laser beam path from a laser source to the gear.

3. The method according to claim 1 or 2 further comprising calibrating diagnostics of the laser source, in particular calibrating photodiode, energy meter, CCD camera for laser profile.

4. The method according to anyone of the previous claim further comprising controlling the laser beam for laser shock peening by the robotic arm.

5. The method according to anyone of the previous claim, wherein the step of providing the gear and applying the laser shock peening is providing a helical gear and applying the laser shock peening on the helical gear.

6. An additive manufactured gear made of stainless steel having distance between two teeth on opposite sides of the gear from 1 mm to 10 mm comprising plurality of teeth obtainable by the method according to anyone of the claims 1 to 6, **characterized in that,**
residual stress introduced by laser shock peening is negative, wherein the residual stress is measured by the method described in [026]; and wherein
arithmetic mean height on the surface, measured by a method described in [028], is up to 40 µm; and wherein number of grains having size less than 50 µm is greater than the number of grains having size greater than 50 µm in any selected area treated by laser shock peening, wherein the grain size is measured by the method described in [027].

7. The additive manufactured gear according claim 6, wherein the residual stress ranges from -430 MPa to -100 MPa, measured by the method described in [028].

8. The additive manufactured gear according claim 6 or 7, wherein peak material volume is from 1,55 µm³/µm² to 1,62 µm³/µm²; and core material volume is from 24,6 µm³/µm² to 25,1 µm³/µm² ; core void volume is from 41 µm³/µm² to 48 µm³/µm² ; and valley void volume is from 1,63 µm³/µm² to 2,21 µm³/µm².

9. The additive manufactured gear according to claim 6 or 7, wherein the gear is a helical gear.

10. The additive manufactured gear according to claim 9, wherein the residual stress ranges from - 430 MPa to -230 MPa.

11. The additive manufactured gear according to claim 9 or 10, wherein average surface roughness Rₐ is at least 10, wherein the average surface roughness is preferably measured by contact profilometry or non-contact optical profilometry or by atomic force microscopy.

12. The additive manufactured gear according to claim 6 or 7, wherein the gear is a spur gear.

13. The additive manufactured gear according to claim 12, wherein the residual stress ranges from - 300 MPa to -100 MPa.

## Patentansprüche

1. Verfahren zur Verbesserung der Oberflächenintegrität eines aus rostfreiem Stahl mittels additiver Fertigung hergestellten Zahnrads, wobei das Zahnrad einen Abstand zwischen zwei Zähnen auf gegenüberliegenden Seiten des Zahnrads von 1 mm bis 10 mm aufweist, umfassend:
• die Bereitstellung des aus rostfreiem Stahl durch additive Fertigung hergestellten Zahnrads;
• das Eintauchen des Zahnrads in ein Wasserbecken, sodass der durch das Laser-Schockverfestigen zu behandelnde Bereich in einer Tiefe von 5-10 cm unterhalb der Wasseroberfläche eingetaucht ist;
• das Einstellen eines Laserstrahls zum Laser-Schockverfestigen, wobei das Einstellen Folgendes umfasst: Einstellen einer Laserimpulsenergie zwischen 200 mJ und 1 J, Einstellen der Pulsdauer des Strahls auf einen Wert zwischen 10 ns und 15 ns, Einstellen der Wiederholungsrate zwischen 1 Hz und 15 Hz und Einstellen der Leistungsdichte des Laserstrahls auf einen Wert zwischen 1,7 GW/cm² und 8,49 GW/cm²;
• das Aufbringen des Laser-Schockverfestigens auf eine Zahnfußwurzel entlang eines Übergangsradius in einem Zwischenraum (103 oder 203) zwischen zwei benachbarten Zähnen (101 und 102), wobei
• das Laser-Schockverfestigen direkt auf die Oberfläche der Zahnräder ohne Schutzabklebung oder Beschichtung erfolgt; und wobei
• die Fleckgröße des Laserstrahls im Wesentlichen der Größe des Zwischenraums entspricht, und wobei die bestrahlten Fleckbereiche sich zu mindestens 90 % überlappen.

2. Verfahren nach Anspruch 1, ferner umfassend das Ausrichten des Laserstrahlpfads von einer Laserquelle zum Zahnrad.

3. Verfahren nach Anspruch 1 oder 2, ferner umfassend das Kalibrieren der Diagnostik der Laserquelle, insbesondere das Kalibrieren einer Photodiode, eines Energiemessgeräts und einer CCD-Kamera zur Laserprofilaufzeichnung.

4. Verfahren nach einem der vorhergehenden Ansprüche, ferner umfassend das Steuern des Laserstrahls für das Laser-Schockverfestigen mittels eines Roboterarms.

5. Verfahren nach einem der vorhergehenden Ansprüche, wobei das Bereitstellen des Zahnrads und das Aufbringen des Laser-Schockverfestigens darin besteht, ein Schraubenrad bereitzustellen und das Laser-Schockverfestigen auf das Schraubenrad anzuwenden.

6. Durch additive Fertigung hergestelltes Zahnrad aus rostfreiem Stahl mit einem Abstand zwischen zwei Zähnen auf gegenüberliegenden Seiten des Zahnrads von 1 mm bis 10 mm, umfassend eine Mehrzahl von Zähnen, erhältlich nach dem Verfahren gemäß einem der Ansprüche 1 bis 6, **dadurch gekennzeichnet, dass**:
• die durch das Laser-Schockverfestigen eingebrachte Eigenspannung negativ ist, wobei die Eigenspannung nach dem in [026] beschriebenen Verfahren gemessen wird; und dass
• die arithmetische Mittenrauhigkeit der Oberfläche bis zu 40 µm beträgt; und dass
• die Anzahl der Körner mit einer Größe von weniger als 50 µm größer ist als die Anzahl der Körner mit einer Größe von mehr als 50 µm in einem beliebig ausgewählten, durch Laser-Schockverfestigen behandelten Bereich, wobei die Korngröße nach dem in [027] beschriebenen Verfahren gemessen wird.

7. Durch additive Fertigung hergestelltes Zahnrad nach Anspruch 6, wobei die Eigenspannung im Bereich von -430 MPa bis -100 MPa liegt, gemessen nach dem in [028] beschriebenen Verfahren.

8. Durch additive Fertigung hergestelltes Zahnrad nach Anspruch 6 oder 7, wobei das Spitzenmaterialvolumen im Bereich von 1,55 µm³/µm² bis 1,62 µm³/µm² liegt; das Kernmaterialvolumen im Bereich von 24,6 µm³/µm² bis 25,1 µm³/µm² liegt; das Kernporenvolumen im Bereich von 41 µm³/µm² bis 48 µm³/µm² liegt; und das Talporenvolumen im Bereich von 1,63 µm³/µm² bis 2,21 µm³/µm² liegt.

9. Durch additive Fertigung hergestelltes Zahnrad nach Anspruch 6 oder 7, wobei das Zahnrad ein Schraubenrad ist.

10. Durch additive Fertigung hergestelltes Zahnrad nach Anspruch 9, wobei die Eigenspannung im Bereich von -430 MPa bis -230 MPa liegt.

11. Durch additive Fertigung hergestelltes Zahnrad nach Anspruch 9 oder 10, wobei die durchschnittliche Oberflächenrauheit Ra mindestens 10 beträgt, wobei die durchschnittliche Oberflächenrauheit vorzugsweise mittels taktiler Profilometrie, berührungsloser optischer Profilometrie oder Rasterkraftmikroskopie gemessen wird.

12. Durch additive Fertigung hergestelltes Zahnrad nach Anspruch 6 oder 7, wobei das Zahnrad ein Stirnrad ist.

13. Durch additive Fertigung hergestelltes Zahnrad nach Anspruch 12, wobei die Eigenspannung im Bereich von -300 MPa bis -100 MPa liegt.

## Revendications

1. Procédé d'amélioration de l'intégrité de surface d'un engrenage en acier inoxydable fabriqué par fabrication additive, l'engrenage ayant une distance entre deux dents situées sur des côtés opposés de l'engrenage comprise entre 1 mm et 10 mm, comprenant :
• la fourniture de l'engrenage en acier inoxydable par fabrication additive ;
• l'immersion de l'engrenage dans un bassin d'eau de manière à ce que la partie devant être traitée par grenaillage au laser soit immergée à une profondeur de 5 à 10 cm sous la surface de l'eau ;
• le réglage d'un faisceau laser pour le grenaillage au laser, ledit réglage comprenant la configuration d'une impulsion laser ayant une énergie comprise entre 200 mJ et 1 J, une durée d'impulsion comprise entre 10 ns et 15 ns, une fréquence de répétition comprise entre 1 Hz et 15 Hz, et une densité du faisceau laser comprise entre 1,7 GW/cm² et 8,49 GW/cm² ;
• l'application du grenaillage au laser à une racine le long d'un rayon de raccordement dans un espace (103 ou 203) entre deux dents voisines (101 et 102), dans lequel
• le grenaillage au laser est appliqué directement sur la surface des engrenages sans bande de protection ni revêtement ; et dans lequel
• la taille du point du faisceau laser est sensiblement identique à la taille de l'espace, et dans lequel les zones irradiées par les points se chevauchent sur au moins 90 % de la surface.

2. Procédé selon la revendication 1, comprenant en outre l'alignement du chemin du faisceau laser depuis une source laser vers l'engrenage.

3. Procédé selon la revendication 1 ou 2, comprenant en outre l'étalonnage des dispositifs de diagnostic de la source laser, en particulier l'étalonnage d'une photodiode, d'un mesureur d'énergie, d'une caméra CCD pour le profil du faisceau laser.

4. Procédé selon l'une quelconque des revendications précédentes, comprenant en outre la commande du faisceau laser pour le grenaillage au laser au moyen d'un bras robotisé.

5. Procédé selon l'une quelconque des revendications précédentes, dans lequel l'étape de fourniture de l'engrenage et d'application du grenaillage au laser consiste à fournir un engrenage hélicoïdal et à appliquer le grenaillage au laser sur l'engrenage hélicoïdal.

6. Engrenage fabriqué par fabrication additive en acier inoxydable, ayant une distance entre deux dents situées sur des côtés opposés de l'engrenage comprise entre 1 mm et 10 mm, comprenant une pluralité de dents obtenues selon le procédé de l'une quelconque des revendications 1 à 6, **caractérisé en ce que** :
• la contrainte résiduelle introduite par le grenaillage au laser est négative, ladite contrainte résiduelle étant mesurée selon la méthode décrite dans [026] ; et **en ce que**
• la hauteur moyenne arithmétique de la surface est inférieure ou égale à 40 µm ; et **en ce que**
• le nombre de grains ayant une taille inférieure à 50 µm est supérieur au nombre de grains ayant une taille supérieure à 50 µm dans toute zone sélectionnée traitée par grenaillage au laser, la taille des grains étant mesurée selon la méthode décrite dans [027].

7. Engrenage fabriqué par fabrication additive selon la revendication 6, dans lequel la contrainte résiduelle varie de -430 MPa à -100 MPa, mesurée selon la méthode décrite dans [028].

8. Engrenage fabriqué par fabrication additive selon la revendication 6 ou 7, dans lequel le volume de matière en pic est compris entre 1,55 µm³/µm² et 1,62 µm³/µm² ; le volume de matière de base est compris entre 24,6 µm³/µm² et 25,1 µm³/µm² ; le volume de vide de base est compris entre 41 µm³/µm² et 48 µm³/µm² ; et le volume de vide de vallée est compris entre 1,63 µm³/µm² et 2,21 µm³/µm².

9. Engrenage fabriqué par fabrication additive selon la revendication 6 ou 7, dans lequel l'engrenage est un engrenage hélicoïdal.

10. Engrenage fabriqué par fabrication additive selon la revendication 9, dans lequel la contrainte résiduelle varie de -430 MPa à -230 MPa.

11. Engrenage fabriqué par fabrication additive selon la revendication 9 ou 10, dans lequel la rugosité moyenne de surface Ra est d'au moins 10, ladite rugosité moyenne de surface étant de préférence mesurée par profilométrie de contact, profilométrie optique sans contact ou microscopie à force atomique.

12. Engrenage fabriqué par fabrication additive selon la revendication 6 ou 7, dans lequel l'engrenage est un engrenage droit.

13. Engrenage fabriqué par fabrication additive selon la revendication 12, dans lequel la contrainte résiduelle varie de -300 MPa à -100 MPa.
